# EUROPEAN PATENT APPLICATION

(11) **EP 1 871 076 A1**
(43) Date of publication of application: **26.12.2007**
(21) Application number: 07011977.1
(22) Date of filing: 19.06.2007
(51) Int. Cl.: H04M 1/02

(54) **Sliding module for mobile phone**

(30) Priority: 19.06.2006 KR 20060054831; 06.03.2007 KR 20070021990
(71) Applicant: Samsung Electronics Co., Ltd., Suwon-si, Gyeonggi-Do (KR)
(72) Inventor: Park, Myoung-Hoon, Yeongtong-gu Suwon-si Gyeonggi-do (KR); Jung, Soo-Ik, Yeongtong-gu Suwon-si Gyeonggi-do (KR)
(74) Representative: Lang, Johannes

(57) **Abstract**

A sliding module for a mobile phone including a first housing and a second housing, the second housing being slidably connected with the first housing, is disclosed. The sliding module allows the second housing to be slid in multiple directions. The sliding module includes a first member fixed to the first housing, a second member fixed to the second housing, and a sliding member provided between the first and second members, so that the second housing is slidable up and down in a first direction and left and right in a second direction in relation to the first housing.

## Description

### BACKGROUND OF THE INVENTION

### Field of the Invention:

The present invention relates to a sliding type mobile phone. More particularly, the present invention relates to a sliding module for a mobile phone with a housing adapted to be capable of sliding in multiple directions.

### Description of the Related Art:

Typically, a mobile phone is an appliance for providing user-to-user or user-to-service provider wireless communication functions through a base station for mobile communication. Different services, such as sound communication, short messaging service, mobile banking, TV programs, on-line games, and VODs (Videos On Demand) are offered to users through mobile phones.

Mobile phones may be classified as bar-type, flip-type and folder-type mobile phones based on their appearance. A bar-type mobile phone has a single body with data input means, data output means, a transmitter, and a receiver. Such a bar-type mobile phone has issues in that the data input means of the mobile phone (i.e. a keypad), may malfunction because it is always exposed. Furthermore, the ability to make the phone smaller is limited because there must be a sufficient distance between the transmitter and the receiver.

A flip-type mobile phone comprises a body, a flip and a hinge module for rotatably interconnecting the body and the flip. The data input and output means, and a transmitter and a receiver, are mounted in the body and the flip covers the data input means (i.e. a keypad), thereby preventing malfunction of the keypad. Like the bar-type phone, the ability to make a flip-type phone smaller is limited because there must be a sufficient distance between the transmitter and the receiver.

A folder-type mobile phone comprises a body, a folder and a hinge module for rotatably interconnecting the body and the folder, wherein the mobile phone is opened or closed as the folder rotates. Such a folder-type mobile phone is in a standby mode when the folder is closed (i.e. proximate to the body), and the closed folder prevents damage to the data input means (i.e. a keypad). Moreover, the folder allows a sufficient distance to be secured between the transmitter and the receiver, which allows the folder-type mobile phone to be made smaller. For these reasons, folder-type mobile phones have recently become more popular.

In a flip-type or folder-type mobile phone, the hinge module that rotatably interconnects the body and the flip or folder applies a force to the flip or folder to urge the flip or folder open once the flip or folder is rotated a predetermined angle away from the body. This way, the flip or folder is opened even if no external force is further applied to the flip or folder. On the other hand, when the flip or folder is rotated less than the predetermined angle, the hinge module applies a force to urge the flip or folder closed.

As the design of mobile phones has become more diverse, another type of mobile phone-a sliding-type type mobile phone-has been commercialized. A sliding type mobile phone comprises two housings, one of which slides with respect to the other housing to open the latter.

Korean Patent Application No. 2002-71911 filed on November 11, 2002 in the Korean Intellectual Property Office in the name of the assignee of the present application (and which corresponds to U.S. Patent Publication No. 2004/0085739, entitled "Sliding-type portable wireless terminal," filed on March 6, 2003, in the U.S. Patent and Trademark Office) discloses an example of a sliding-type mobile phone. Both of these applications are hereby incorporated by reference in their entirety. These applications disclose a mobile phone having a pair of housings and a sliding module for slidably connecting the pair of housings. The mobile phone is configured so that as one of the pair of housings slides, a part of the other housing, in particular a keypad, is opened or closed. One of the housings is provided with a spring module, and the other housing is provided with sliding guide means in a form of rails. The housings are slidably connected with each other by the spring module and the sliding guide means.

In addition to the above-mentioned sliding module, various other sliding modules have been used with sliding type mobile phones. One example of another type of sliding module has a sliding plate, which is fitted on one housing of a sliding type mobile phone, and a sliding guide, which is fitted on the other housing.

Although mobile phones have undergone changes to include multimedia functions, they are still typically folder or sliding type phones. Furthermore, although users' tastes in mobile phones have become more diverse as they have become more popular, the designs of the phones have not increased to meet the more diverse tastes of users.

Moreover, conventional sliding-type mobile phones have a construction in which two housings face each other and one of the housings slides in only one direction. Typically, the sliding of one housing only exposes about half of the length of the other fixed housing. Thus, the entire area of the mobile phone cannot be used, which limits the available space for installing keys and display devices, such as liquid crystal display devices.

Accordingly, there is a need for a sliding module for a mobile phone that enhances the available usable area.

### SUMMARY OF THE INVENTION

An aspect of the present invention is to address at least the above problems and/or disadvantages and to provide at least the advantages described below. Accordingly, an aspect of the present invention is to provide a sliding module for a mobile phone having two housings, which are assembled in such a manner that one of the housings is slidable in four directions of up and down, left and right in relation to the other housing.

Another aspect of the present invention is to provide a sliding module for a mobile phone having two housing, wherein the sliding module allows the two housings to be interconnected with each other in such a manner that one of the housings is slidable in four directions of up and down, left and right in relation to the other housing, whereby the mobile phone is placed into various operational modes according to the moving directions of the one housing.

Still another aspect of the present invention is to provide a sliding module for a mobile phone, which has stopper units adapted to limit the leftward/rightward sliding movement when housings of the mobile phone are moved up and down, so that the mobile phone can easily slide.

According to an aspect of the present invention, a sliding module for a mobile phone including a first housing and a second housing, the second housing being slidably connected with the first housing, is provided. The sliding module comprises a first member fixed to the first housing, a second member fixed to the second housing, and a sliding member provided between the first and second members, so that the second housing is assembled in such a manner as to be slidable up and down in a first direction and left and right in a second direction in relation to the first housing.

According to another aspect of the present invention, a sliding module for a mobile phone including a first housing and a second housing, the second housing being slidably connected with the first housing, is provided. The sliding module comprises first and second members fixed to the first and second housings, respectively; a sliding member provided between the first and second members, so that the second housing is assembled to be slidable up and down in a first direction and left and right in a second direction in relation to the first housing; a first stopper unit positioned between respective members to limit leftward/rightward sliding movement in the second direction when the second housing slides up/down in the first direction; and a second stopper unit positioned between the second member and the sliding member, the second stopper unit selectively making a surface contact with guide members of the second member and engaging with/disengaging from the guide members to limit sliding movement in leftward and rightward termination positions of the second housing.

### BRIEF DESCRIPTION OF THE DRAWINGS

The above and other objects, features, and advantages of certain exemplary embodiments of the present invention will be more apparent from the following description taken in conjunction with the accompanying drawings, in which:
FIG. 1 is an exploded perspective view of a mobile phone having a sliding module, according to an exemplary embodiment of the present invention;
FIG. 2 is an exploded perspective view of the sliding module of FIG. 1, prior to assembling a second member of the sliding module, wherein a part of the sliding module is cut away;
FIG. 3 is a perspective view of the sliding module of FIG. 1, in an assembled state;
FIG. 4 is a top plan view of the mobile phone of FIG. 1, in a state in which the second housing of the mobile phone is moved up in a first direction A1 in relation to the first housing;
FIG. 5 is a perspective view of the sliding module of FIG. 1 with the second member assembled to the sliding member, in a state in which the second member is moved up in the first direction A1;
FIG. 6 is a top plan view of the mobile phone of FIG. 1, in a state in which the second housing of the mobile phone is moved down in the first direction A1;
FIG. 7 is a perspective view of the sliding module of FIG. 1 with the second member assembled to the sliding member, in a state in which the second member is moved down in the first direction A1;
FIG. 8 is a perspective view of the sliding module of FIG. 1 with the second member, a part of which is partially cut away, in a state in which the second member is positioned in an initial condition for sliding in a second direction A2;
FIG. 9 is a top plan view of the sliding module of FIG. 1 with the second member, a part of which is partially cut away, in a state in which the second member is positioned in the initial condition for sliding in the second direction A2;
FIG. 10 is a top plan view of the mobile phone of FIG. 1, in a state in which the second housing of the mobile phone is moved right in the second direction A2 in relation to the first housing;
FIG. 11 is a perspective view of the sliding module of FIG. 1 with the second member, a part of which is partially cut away, in a state in which the second member is moved right in the second direction A2;
FIG. 12 is a top plan view of the sliding module of FIG. 1 with the second member, a part of which is partially cut away, in a state in which the second member is moved right in the second direction A2;
FIG. 13 is a top plan view of the mobile phone of FIG. 1 in a state in which the second housing of the mobile phone is moved left in the second direction A2 in relation to the first housing;
FIG. 14 is a perspective view of the sliding module of FIG. 1 with the second member, a part of which is partially cut away, in a state in which the second member is moved left in the second direction A2;
FIG. 15 is a top plan view of the sliding module of FIG. 1 with the second member, a part of which is partially cut away, in a state in which the second member is moved left in the second direction A2;
FIG. 16 is an exploded perspective view of a mobile phone having a sliding module, according to another exemplary embodiment of the present invention;
FIG. 17 is an exploded perspective view of the sliding module of FIG. 16, prior to assembling a second member of the sliding module, wherein a part of the sliding module is cut away;
FIG. 18 is a perspective view of the sliding module of FIG. 16, in an assembled state;
FIG. 19 is a perspective view of the sliding module of FIG. 16, in a state in which the sliding module is moved up in a first direction A1;
FIG. 20 is a sectional view taken along line A-A' of FIG. 19;
FIG. 21 is a sectional view magnifying part A of FIG. 20;
FIG. 22 is a perspective view of the sliding module of FIG. 16, in a state in which the sliding module is moved down in the first direction A1;
FIG. 23 is a perspective view of the sliding module of FIG. 16, a part of which is partially cut away, in a state in which the sliding module is positioned in an initial condition for sliding in a second direction A2;
FIG. 24 is a sectional view taken along line B-B' of FIG. 23;
FIG. 25 is a sectional view magnifying part B of FIG. 24;
FIG. 26 is a perspective view of the sliding module of FIG. 16, a part of which is partially cut away, in a state in which the second member is moved right in the second direction A2;
FIG. 27 is a top plan view of the sliding module of FIG. 16, a part of which is partially cut away, in a state in which the second member is moved right in the second direction A2;
FIG. 28 is a perspective view of the sliding module of FIG. 16, a part of which is partially cut away, in a state in which the second member is moved left in the second direction A2; and
FIG. 29 is a top plan view of the sliding module of FIG. 16, a part of which is partially cut away, in a state in which the second member is moved left in the second direction A2.

Throughout the drawings, the same reference numerals will be understood to refer to the same elements, features, and structures.

### DETAILED DESCRIPTION

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

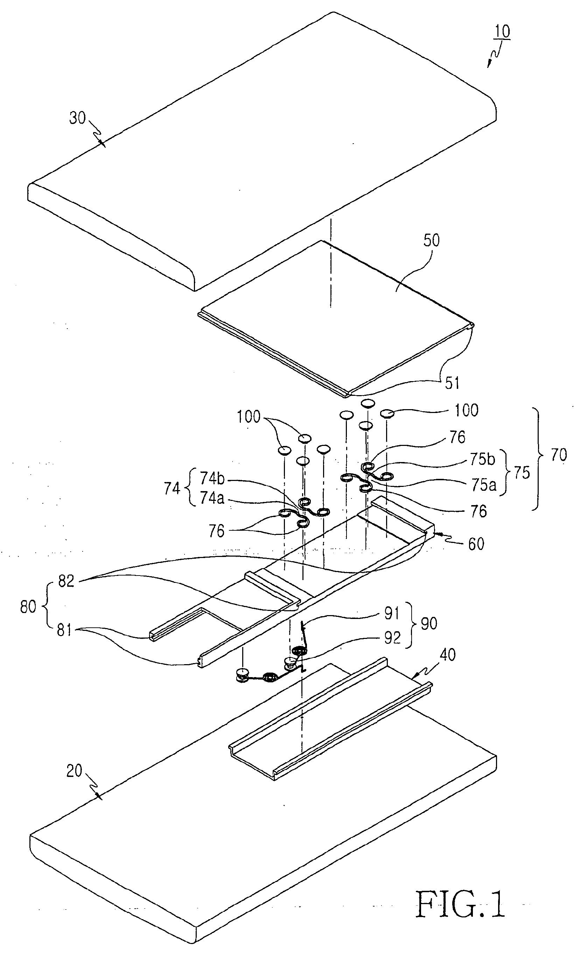

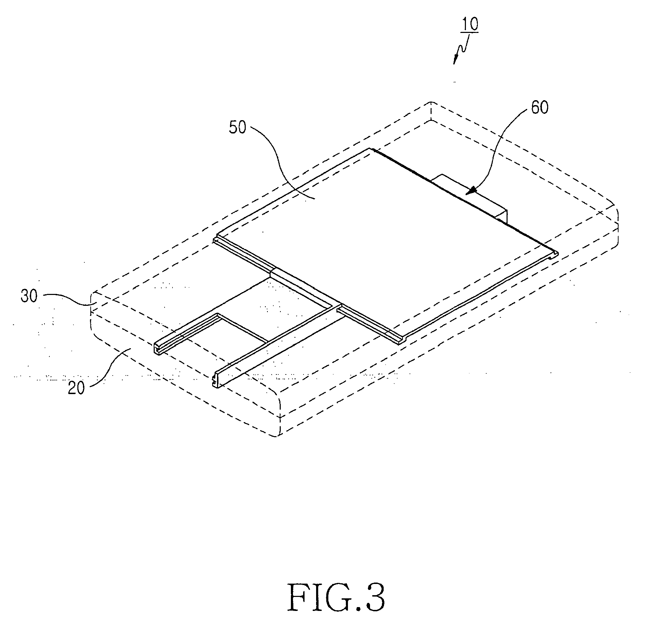

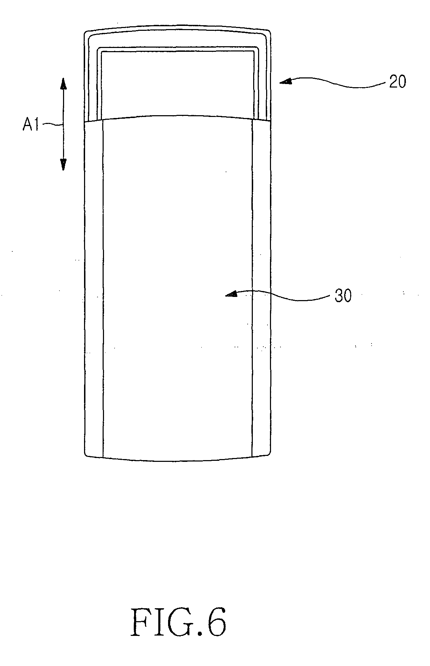

As shown in FIGS. 1 to 3, a sliding module 10 for a mobile phone having first and second housings 20 and 30 comprises first and second members 40 and 50, and a sliding member 60. The first member 40 is slidably engaged with the sliding member 60 (as will be described in further detail later), and is fixed to the first housing 20 in such a manner that the second housing 30 is engaged with the first member 40 to be slidable in a first direction (or axis) A1 while facing the first housing 20. The second member 50 is slidably engaged with the sliding member 60 and fixed to the second housing 30 in such a manner that the second housing 30 is engaged with the second member 50 to be slidable in a second direction (or axis) A2 while facing the first housing 20. According to one embodiment, the directions (or axes) A1 and A2, as shown, for example, in FIGS. 6, 7, 10, and 11, are substantially perpendicular. The sliding member 60 is provided between the first and second members 40 and 50 to allow the second housing 30 to be assembled in such a manner as to be slidable up and down in the first direction A1 and left and right in the second direction A2 in relation to the first housing 20.

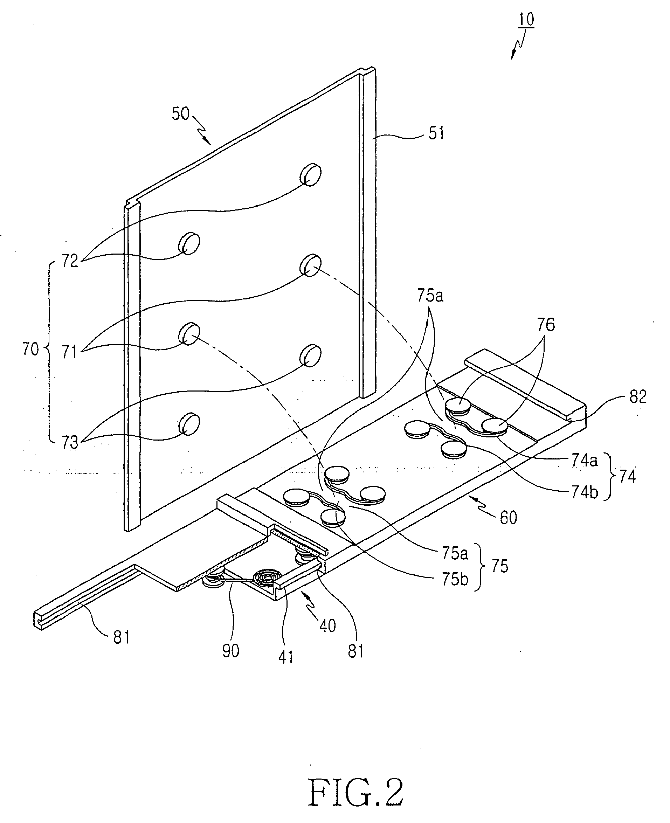

As shown in FIG. 2, a stopper unit 70 is provided between the second member 50 and the sliding member 60 to limit the sliding movement of the second housing 30 at the end of each moving direction when the second housing 30 is moved left and right in relation to the first housing 20.

As shown in FIGS. 1,2, 5, and 7, a guide unit 80 is provided on the top and bottom sides of the sliding member 60 to slidably guide the second housing 30 up and down, and left and right in the first and second directions A1 and A2 in relation to the first housing 20. The guide unit 80 comprises a pair of first guide portions 81 and a pair of second guide portions 82. The first guide portions 81 are positioned at opposite lateral edges of the bottom side of the sliding member 60 and extend in the first direction A1 in such a manner as to be slidably engaged with a pair of guide rails 41, which are positioned at the opposite lateral edges of the first member 40, and movable up and down in the first direction A1. The second guide portions 82 are positioned at the opposite ends of the top side of the sliding member 60 and extend in the second direction A2 in such a manner as to be slidably engaged with a pair of guide rails 51, which are positioned at the opposite ends of the second member 50, and movable left and right in the second direction A2.

As shown in FIG. 1, a biasing unit 90 is provided between the first member 40 and the sliding member 60 to provide a force urging the second housing 30 to be semi-automatically moved along the first direction (axis). According to one embodiment, the biasing unit 90 comprises a pair of elastic members. A first end 91 of each elastic member being anchored to the first member 40 and a second end 92 is anchored to the sliding member 60, so that each elastic member moves along a given track when the second housing 30 is moved up and down in the first direction A1.

As shown in FIGS. 1, 2, 10, 11, 12, 13, 14 and 15, the stopper unit 70 comprises first, second and third stopper members 71, 72 and 73, and a stopper clip unit 74. The first stopper member 71 is positioned on the inner surface of the second member 50 at a position corresponding to the sliding initiation position of the second housing 30, so that when the second housing 30 slides, the first stopper member 71 is slid together with the second member 50 and engaged with or disengaged from the stopper clip unit 74, which will be described in detail later. The second stopper member 72 is positioned on the inner surface of the second member 50 at a leftward sliding termination position of the second housing 30, so that when the second housing 30 slides, the second stopper member 72 is slid together with the second member 50 and engaged with or disengaged from the stopper clip unit 74. The third stopper member 73 is positioned on the inner surface of the second member 50 at a rightward sliding termination position of the second housing 30, so that when the second housing 30 slides, the third stopper member 73 is slid together with the second member 50 and engaged with or disengaged from the stopper clip unit 74. The stopper clip unit 74 is provided on the top side of the sliding member 60, so that as the second housing 30 is moved left or right from the initial position, the second member 50 and, hence, the first, second and third stopper members 71, 72 and 74 are moved with the second housing 30, and the stopper clip unit 74 is engaged with the first, second and third stopper members 71, 72 and 73 at the sliding initiation position, leftward sliding termination position, and rightward sliding termination position of the second housing 30, respectively, thereby limiting the sliding movement of the second housing 30.

As shown in FIGS. 1, 8 and 9, the stopper clip unit 74 comprises a pair of elastic members providing an elastic force so that the stopper clip unit 74 can be engaged with and disengaged from each of the stopper members 71, 72 and 73. According to one embodiment, the elastic members may be made from first and second wire springs 74a and 74b, which are oppositely and symmetrically positioned, and a locking space 75 is formed between the first and second wire springs 74a and 74b, so that each of the stopper members 71, 72 and 74 can be inserted into or removed from the locking space 75.

As shown in FIGS. 2, 8 and 9, the locking space 75 has a pair of guide openings 75a, which are positioned at the opposite ends of the locking space 75 to guide the engagement and disengagement of each of the stopper members 71, 72 and 73, and a stopper space 75b, which is positioned at the center of the locking space 75 to lock and stop each of the stopper members 71, 72 and 73.

As shown in FIG. 1, each end of the first and second wire springs 74a and 74b is formed with a spring anchoring part 76, through which an anchoring member 100 is fitted, thereby anchoring the wire springs 74a and 74b to the top side of the sliding member 60.

The operation of the above-described sliding module for a mobile phone according to an exemplary embodiment of the present invention will now be described in more detail with reference to FIGS. 1 to 15.

As shown in FIGS. 1 to 3, a mobile phone 10 comprises first and second housings 20 and 30, first and second members 40 and 50, and a sliding module 60.

The first housing 20 is provided with an input unit, such as a camera lens module (not shown), a microphone (not shown), and a keypad (not shown), and the second housing 30 is provided with a speaker (not shown) and a display device (not shown).

The sliding member 60 is provided between the first and second members 40 and 50. The first member 40 is fixed to the first housing 20 and the second member 50 is fixed to the second housing 30.

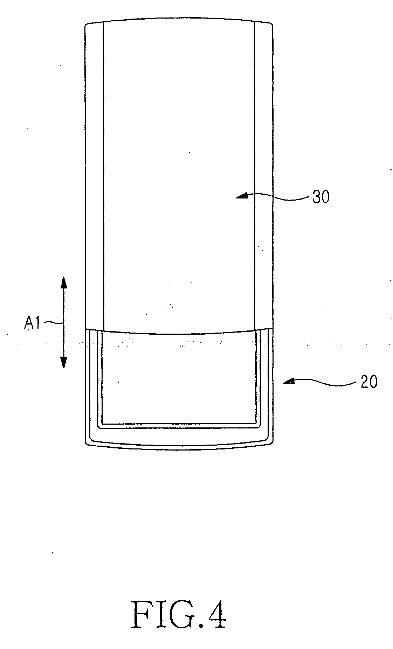

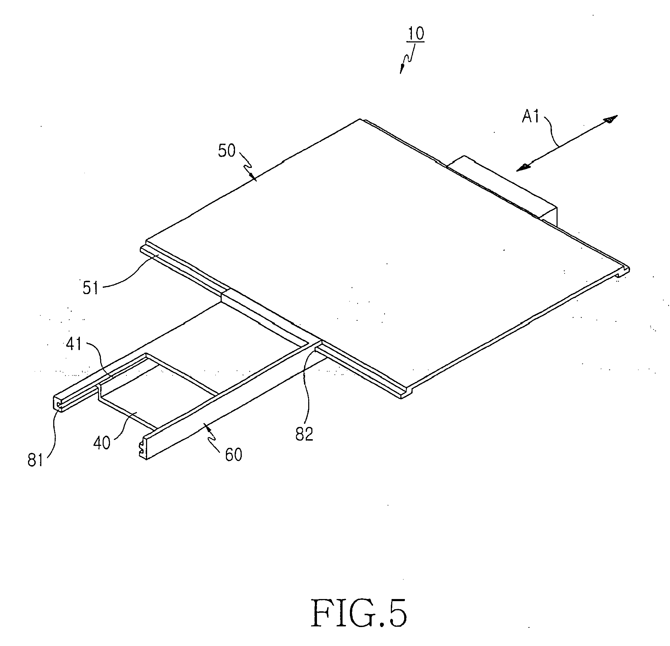

When it is desired to use the mobile phone in a first mode, such as a calling mode, the user slides the second housing 30 up in the first direction A 1 in relation to the first housing 20 as shown in FIGS. 4 and 5.

As shown in FIG. 5, as the second housing 30 slides, the second member 50 and the sliding member 60 slide together with the second housing 30. As described above, a pair of first guide portions 81 are positioned at the opposite lateral edges of the bottom side of the sliding member 60. Therefore, when the sliding member 60 is moved along the first direction A1, the first guide portions 81 are also moved in the first direction A1 along the guide rails 41 positioned at the opposite lateral edges of the first member 40.

At this time, as shown in FIGS. 1 and 5, the biasing unit 90 provided between the first member 40 and the sliding member 60 provides a force urging the second housing 30 to be semi-automatically moved if the second housing 30 is moved more than a predetermined distance. Therefore, the second housing 30 is further moved in the first direction A1 by the biasing unit 90. According to one embodiment, the biasing unit 90 comprises elastic members. The first end 91 of each elastic member is anchored to the first member 40 and the second end 92 is anchored to the sliding member 60, so that each elastic member is moved along a given track when the second housing 30 is moved in the first direction A1.

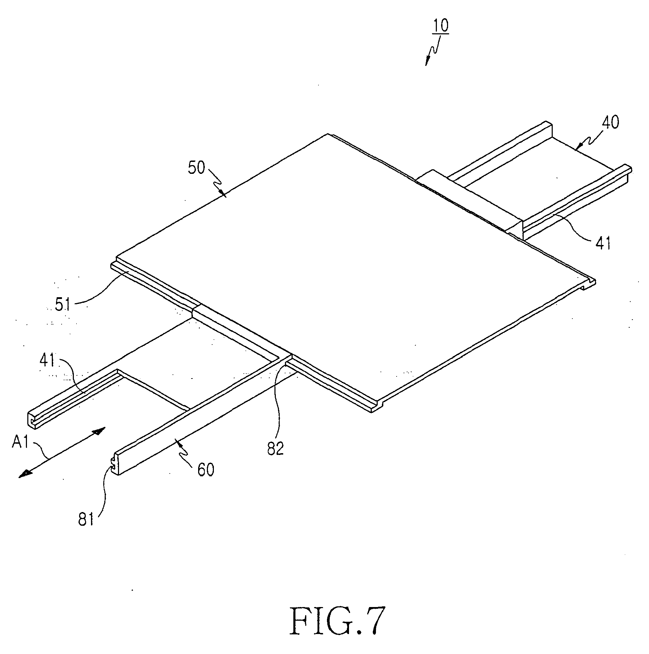

When it is desired to use the mobile phone in a different mode, such as a camera mode, the user slides the second housing 30 down in the first direction A1 in relation to the first housing, as shown in FIGS. 6 and 7.

At this time, as the second housing 30 slides, the second member 50 and the sliding member 60 also slide simultaneously with the second housing 30, as shown in FIG. 7. When the sliding member 60 is moved, the first guide portions 81, which are positioned at the opposite lateral edges of the bottom side of the sliding member 60, slide down in the first direction A1 along the guide rails 41 positioned at the opposite lateral edges of the first member 40.

At this time, if the second housing 30 is moved more than the predetermined distance, the housing 30 is further moved down in the first direction A1 by the biasing unit 90, which is provided between the first member 40 and the sliding member 60, as shown in FIG. 6.

Because the first ends 91 of the elastic members of the biasing unit 90 is anchored to the first member 40 and the second ends 92 are anchored to the sliding member 60 as described above, each elastic member is moved along a given track when the second housing 30 slides down in the first direction A1.

If the second housing 30 is moved down in the first direction A1, a camera lens module (not shown) provided in the first housing 30 is exposed, whereby it is possible to take a photograph.

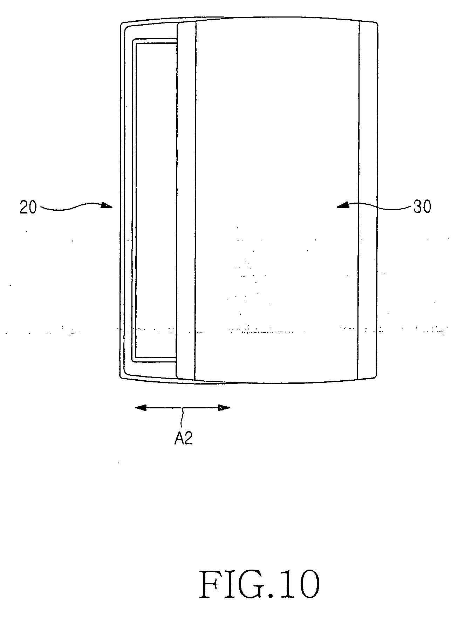

From this state, if it is desired to use the mobile phone in a different mode, such as a TV viewing mode (or DMB (Digital Multimedia Broadcasting) mode), the user may slide the second housing right in the second direction A2 in relation to the first housing 20, as shown in FIGS. 10 to 12.

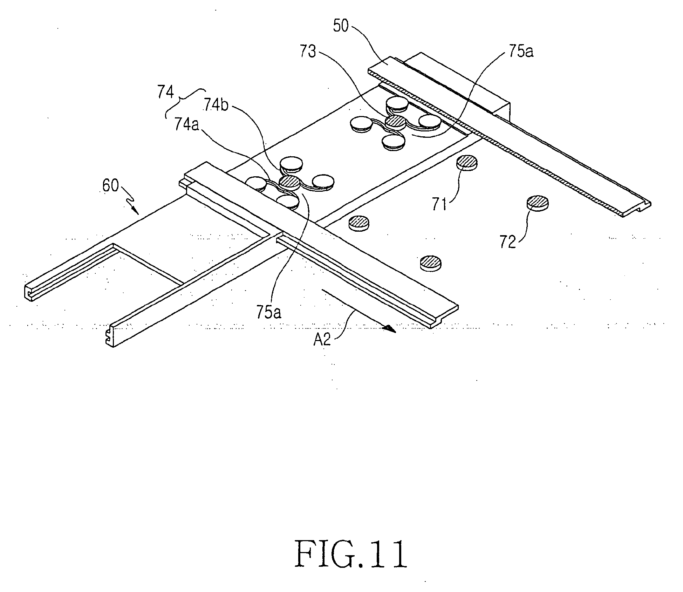

At this time, as shown in FIG. 11, as the second housing 30 slides, the second member 50 also slides simultaneously with the second housing 30. Here, the pair of second guide portions 82 are positioned at opposite ends of the top side of the sliding member 60. Therefore, if the second member 50 is moved, the second guide portions 82 are moved to the right, along the second direction A2, along a pair of guide rails 51 positioned at the opposite ends of the second member 50, as shown in FIG. 11.

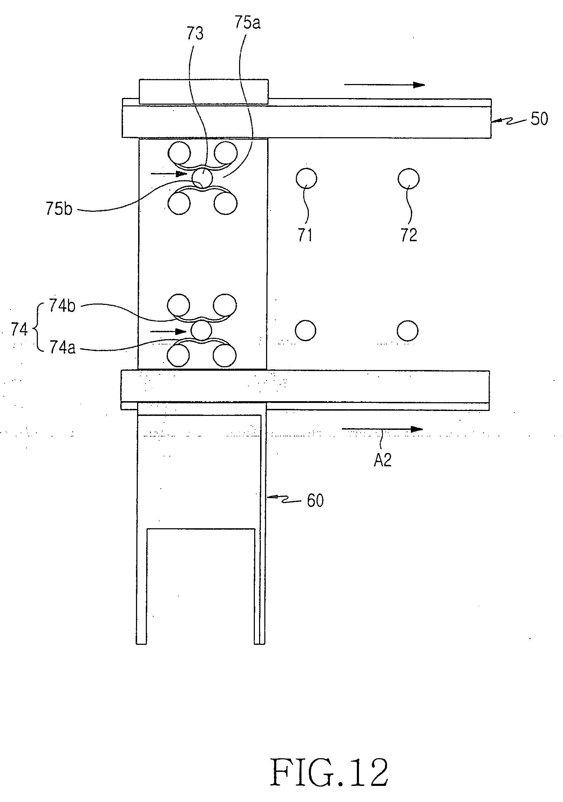

As shown in FIG. 12, stopper unit 70 is provided between the second member 50 and the sliding member 60 to limit the sliding movement at a rightward sliding termination position of the second housing 30 when the second housing 30 is moved right in relation to the first housing 20. Therefore, after sliding right in the second direction A2, the second housing 30 is stopped at the rightward sliding termination position by the stopper unit 70.

As shown in FIGS. 11 and 12, the stopper unit 70 comprises the first, second and third stopper members 71, 72 and 73, and stopper clip unit 74. The first, second and third stopper members 71, 72 and 73 are provided on the internal surface of the second member 50 at the sliding initiation position, the leftward sliding termination position, and the rightward sliding termination position of the second housing 30, respectively. The stopper clip unit 74 is provided on the top side of the sliding member 60.

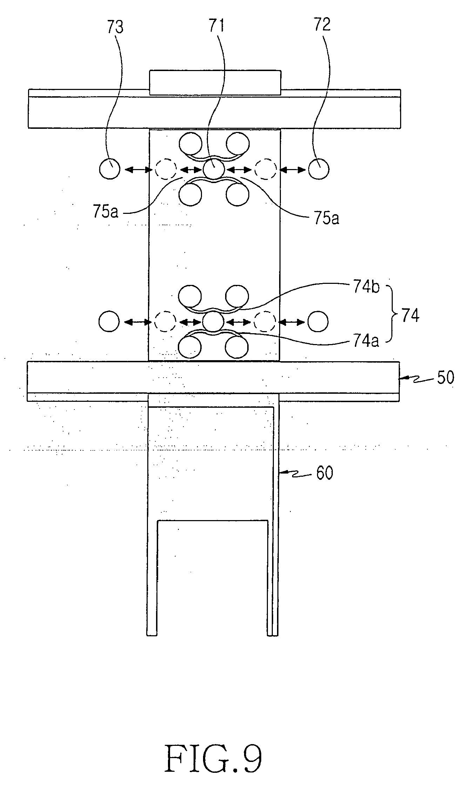

At the sliding initiation position of the second housing 30, shown, for example, in FIG. 9, the first stopper member 71 is inserted into the stopper clip unit 74. From this state, if the second housing 30 slides right in the second direction A2, the second member 50, as well as the first, second and third stopper members 71, 72 and 74, are simultaneously moved together with the second housing 30.

At this time, the first stopper member 71 is removed from the locking space 75, which is positioned in the stopper clip unit 74. The locking space 75 has a pair of guide openings 75a at the opposite ends thereof. Therefore, as the first stopper member 71 is removed from the locking space 75, the second stopper 72 or the third stopper 73 is simultaneously guided into the locking space 75 through the corresponding guide opening 75a. Because the third stopper member 73 is positioned at the rightward sliding termination position of the second housing 30, if the second housing 30 is moved right in the second direction A2, the third stopper member 73 is also moved and then inserted into the stopper clip member 74, thereby limiting the movement of the second housing 30.

As shown in FIG. 12, the third stopper 73 is inserted into the locking space 75 of the stopper clip member 74 by being guided through the corresponding guide opening 75a. After being guided through the corresponding guide opening 75a, the third stopper member 73 is locked in the stopper space 75b positioned at the center of the locking space 75, whereby the movement of the third stopper 73 is stopped.

As shown in FIGS. 1 and 2, the stopper clip unit 74 comprises a pair of elastic members providing elastic force in such a manner that each of the stopper members 71, 72 and 73 is engaged with or disengaged from the stopper clip unit 74. According to one embodiment, the elastic members may be made from first and second wire springs 74a and 74b. The first and second wire springs 74a and 74b are oppositely and symmetrically arranged, and the locking space 75 is formed between the first and second wire springs 74a and 74b.

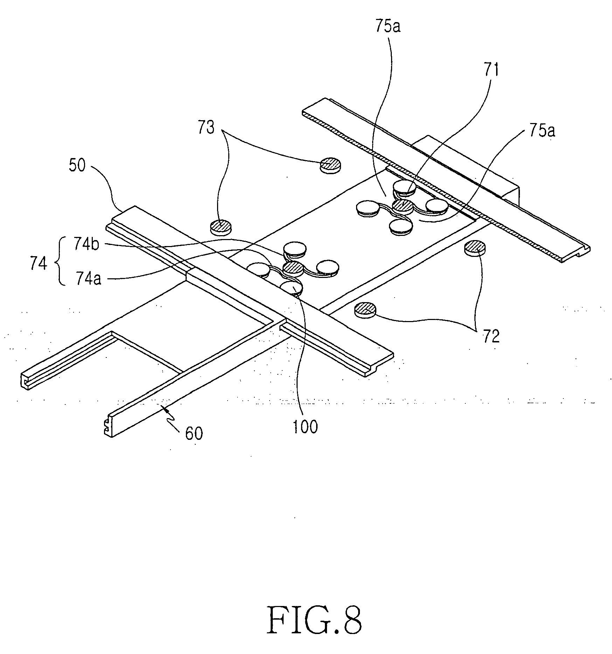

In this state, if it is desired to return the second housing 30 to its original position, the second housing 30 is returned to its original position by being moved as shown in FIGS. 8 and 9. At this time, as the third stopper member 73 is removed from the locking space 75 of the stopper clip unit 74, the first stopper member 71 is also moved and inserted into the locking space 75 of the stopper clip member 74.

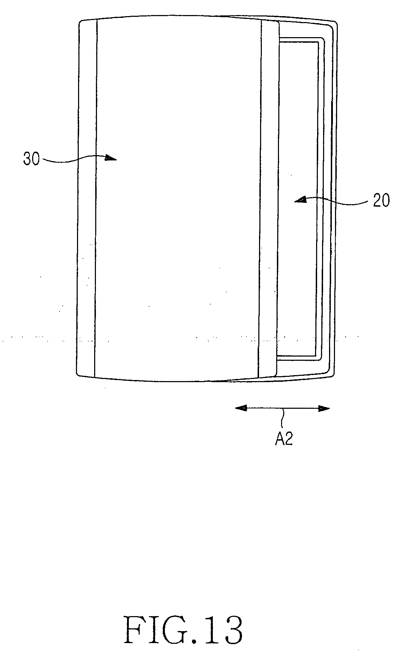

In this state, if it is desired to switch into a different mode, such as a music listening mode, to listen to music that has been downloaded to the mobile phone by the user (MP3 function), the user slides the second housing 30 left in the second direction A2 in relation to the first housing 20, as shown in FIGS. 13 to 15.

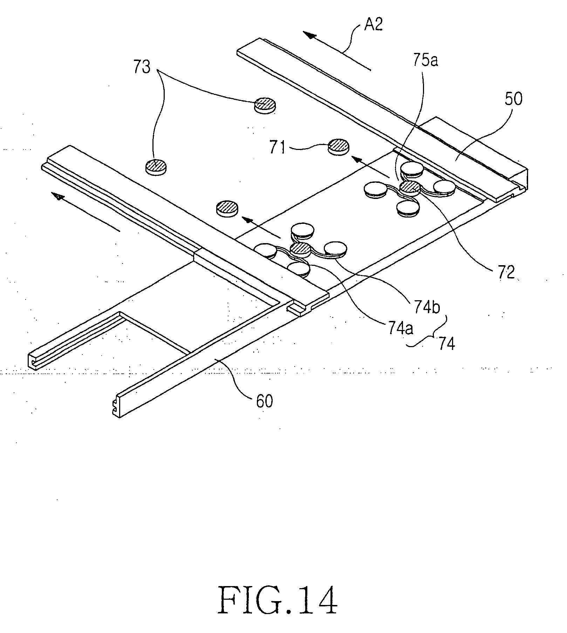

At this time, as the second housing 30 slides as shown in FIG. 14, the second member 50 also slides together with the second housing 30. Because the pair of second guide portions 82 are positioned at the opposite ends of the top side of the sliding member 60, if the second member 50 is moved, the second guide portions 82 slide in the second direction A2 along a pair of guide rails 51 positioned at the opposite ends of the second member 50.

At this time, because the stopper unit 70 is provided between the second member 50 and the sliding member 60 to limit the sliding movement at the leftward sliding termination position of the second housing 30 when the second housing 30 is moved left in relation to the first housing 20, the second housing 30 slides left in the second direction A2 of the second housing 30 and is then stopped at the leftward sliding termination position by the stopper unit 70.

As shown in FIGS. 1 and 9, the stopper unit 70 comprises first, second and third stopper members 71, 72 and 73, and stopper clip unit 74. The first, second and third stopper members 71, 72 and 73 are provided on the inner surface of the second member 50 at the sliding initiation position, the leftward sliding termination position, and the rightward sliding termination position, respectively. The stopper clip unit 74 is provided on the top side of the sliding member 60.

As shown in FIGS. 9, 14 and 15, at the sliding initiation position of the second housing 30, the first stopper member 71 is inserted into the stopper clip unit 74, and if the second housing 30 slides left in the second direction A2 from this state, the second member 50, as well as the first, second, and third stopper members 71, 72, and 73 also move together with the second housing 30. At this time, the first stopper member 71 is removed from the locking space 75 positioned in the stopper clip unit 74. As the stopper space 75 has guide openings 75a at the opposite ends thereof for guiding each of the stopper members 71, 72 and 73 to be inserted into or removed from the locking space 75, the first stopper member 71 is guided through one of the guide openings 75a while being removed from the locking space 75.

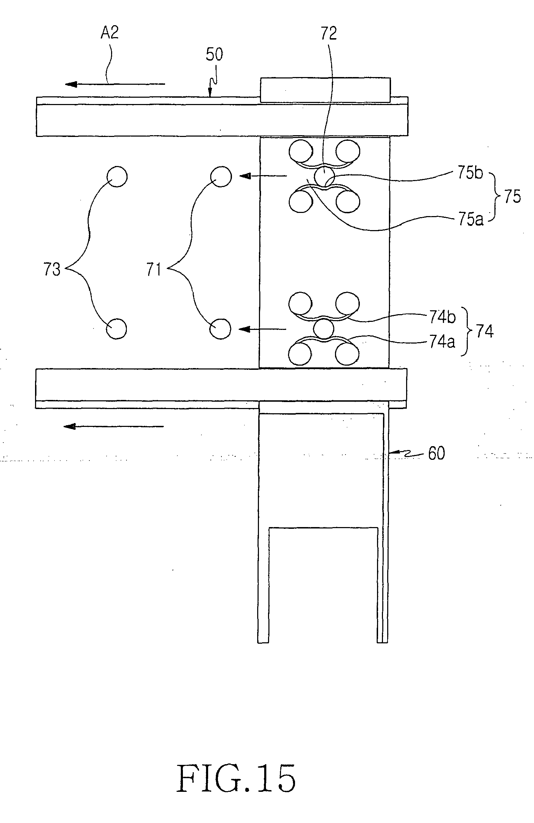

As shown in FIG. 15, the second stopper 72 is positioned at the leftward sliding termination position of the second housing 30. Therefore, as the second housing 30 is moved left in the second direction A2, the second stopper member 72 is also moved and inserted into the stopper clip unit 74, thereby limiting movement of the second housing. When inserted into the stopper clip unit 74, the second stopper member 72 is guided through the guide opening 75a positioned at the right end of the locking space 75. After being guided through the guide opening 75a and inserted into the stopper clip unit 74, the second stopper member 72 is locked in stopper space 75b positioned at the center of the locking space 75, whereby the movement of the second stopper member 72 is stopped.

From this state, if it is desired to return the second housing 30 to its original position, the second housing 30 is moved again to its original position, as shown in FIGS. 8 and 9. At this time, as the second stopper member 72 is removed from the locking space 75 of the stopper clip unit 74, the first stopper member 71 is also moved together with the second stopper member 72 and inserted into the locking space 75 of the stopper clip unit 74.

As described above, by constructing the second housing in the mobile phone to be slidable up and down, and left and right along the first and second directions (axes), it is possible to use the mobile phone in various modes, which will help meet the diverse tastes of users.

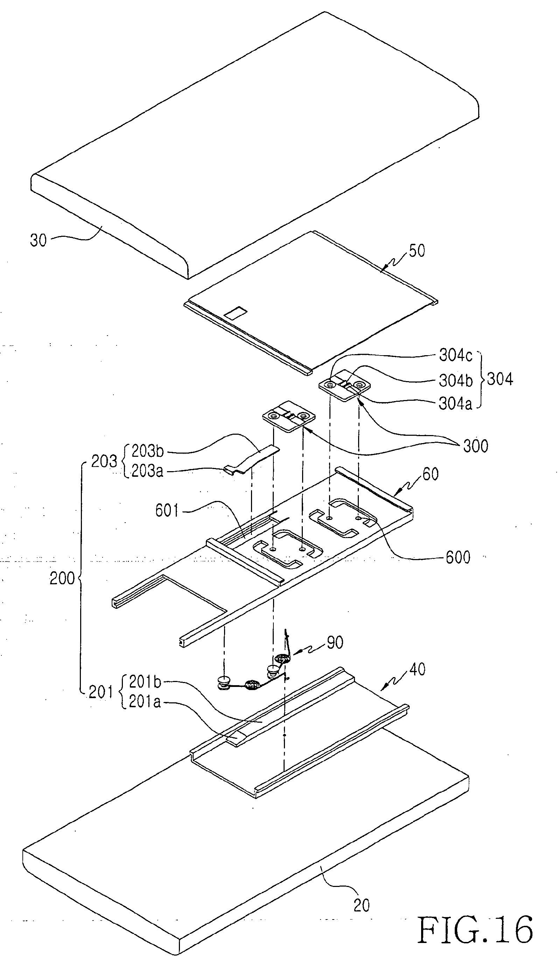

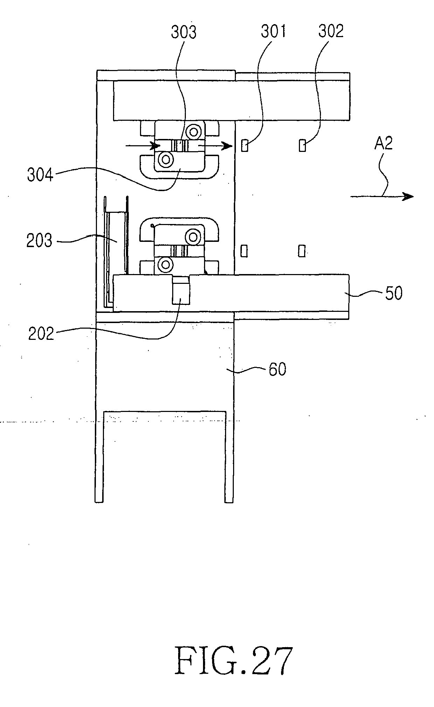

The operation of a sliding module for a mobile phone according to another exemplary embodiment of the present invention will now be described in more detail with reference to FIGS. 16 to 29.

As shown in FIGS. 16, 17, and 18, a sliding module 10 for a mobile phone includes first and second housings 20 and 30, first and second members 40 and 50, a sliding member 60, and first and second stopper units 200 and 300.

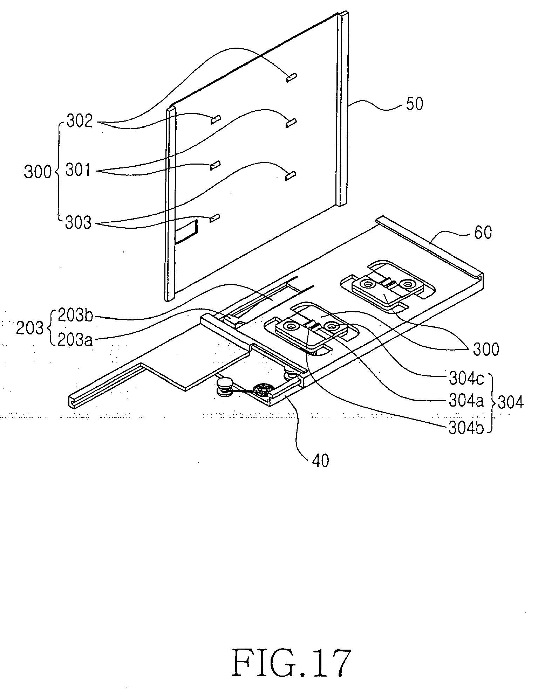

As shown in FIGS. 16 and 17, according to one aspect, the first stopper unit 200 includes components positioned on the first, second, and sliding members 40, 50, and 60, respectively, so that when the second housing 30 slides up/down in the first direction A1, its leftward/rightward sliding movement in the second direction A2 is limited. And the second stopper unit 300 includes components positioned between the second and sliding members 50 and 60 that, when they contact surfaces positioned on first, second, and third guide members 301, 302, and 303, which are positioned on the inside of the second member 50, the components engage with or disengage from these guide members accordingly, to limit the sliding movement of the second housing 30 at its leftward and rightward termination positions.

As shown in FIGS. 16, 19, 20, and 21, the first stopper unit 200 includes a guide stopper member 201, a stopper lock hole 202, and a stopper locker unit 203. The guide stopper member 201 is positioned on the inside of the first member 40 to enable the stopper locker 203 (described later) to move up/down and engage with/disengage from the stopper lock hole 202 (described later). The stopper lock hole 202 is positioned on the second member 50 so that the stopper locker unit 203 can engage with/disengage from the stopper lock hole 202. The stopper locker unit 203 is positioned on the sliding member 60 to correspond with both the guide stopper member 201 and the stopper lock hole 202, so that when the second housing 30 moves up/down in the first direction A1, the stopper locker unit 203 is guided along the guide stopper member 201 while moving up/down and engages with/disengages from the stopper lock hole 202 of the second member 50, to restrict the leftward/rightward movement of the second housing.

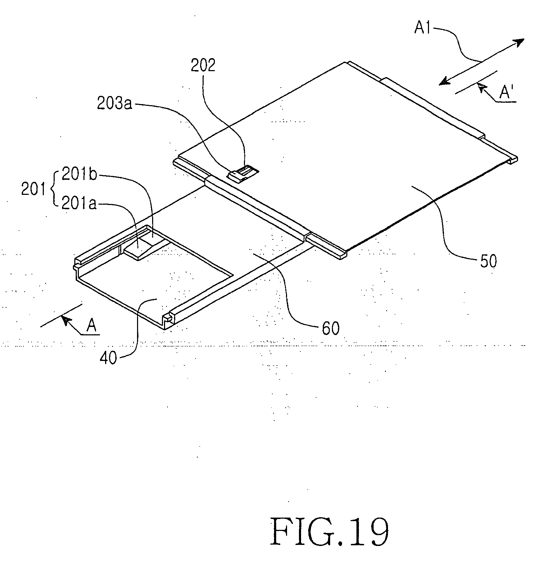

As shown in FIGS. 19, 20, and 21, the guide stopper member 201 has a first guide surface 201a thereon so that the stopper locker unit 203 can engage with/disengage from the stopper lock hole 202, and a second guide surface 201b thereon so that once the stopper locker unit 203 is inserted into the stopper lock hole 202, the stopper locker unit 203 remains inserted therein. According to one embodiment, the first guide member 201 a is slanted with respect to the second guide surface 201b. The stopper locker unit 203 has a lock protrusion 203a positioned on one end that is adapted to engage with/disengage from the stopper lock hole 202 as it moves up/down, and a leaf spring 203b positioned on the other end to provide elastic force for moving the lock protrusion 203a up/down.

As shown in FIG. 16, according to one embodiment, the sliding member 60 has a mounting hole 601 positioned so that the stopper locker unit 203 can be mounted therein.

As shown in FIGS. 16, 24, and 25, the second stopper unit 300 includes first, second, and third guide members 301, 302, and 303, and a guide stopper unit 304. The first, second, and third guide members 301, 302, and 303 are positioned on the inner surface of the second member 50 to define the initial sliding position, leftward termination position, and rightward termination position of the second housing 30, respectively, and are adapted to slide together with the second member 50. The guide stopper unit 304 has a planar shape and is positioned on the upper surface of the sliding member 60, so that when the second housing 30 is in the initial position or moves left/right in the second direction A2, the first, second, and third guide members 301, 302, and 303 move together and the guide stopper unit 304 makes a surface contact with respective guide members 301, 302, and 303 and engages with/disengages from them, thereby limiting the movement.

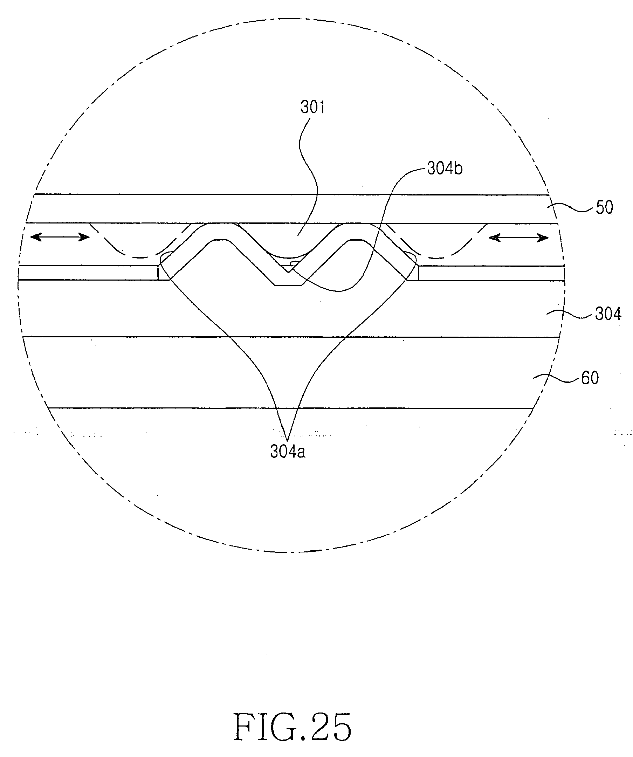

As shown in FIG. 25, according to one embodiment, the guide stopper unit 304 includes a leaf spring. The guide stopper unit 304 has: stopper guide surfaces 304a positioned on both sides to contact surfaces, which are positioned on respective guide members 301, 302, and 303, and guide the surfaces while being able to engage/disengage; and a contact space defined at the center of the guide stopper unit 304 by contact surfaces 304b, so that the surfaces positioned on respective guide members 301, 302, and 303 are guided along the stopper guide surfaces 304a and, upon contacting the contact surfaces 304b, stop moving.

As shown in FIG. 16, according to one embodiment, the second stopper unit 300 has at least one fastener 304c positioned thereon, which is fastened to a screw hole 600 positioned on the sliding member 60.

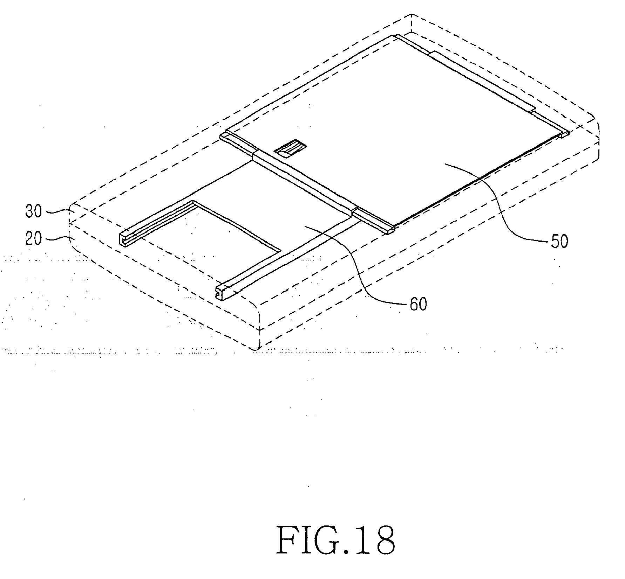

When it is desired to use the mobile phone in a calling mode, the user slides the second housing 30 up in the first direction A1 in relation to the first housing 20, as shown in FIGS. 18 and 19.

As shown in FIGS. 19, 20, and 21, the sliding movement of the second housing 30 is simultaneous with that of the second and sliding members 50 and 60. In addition, the stopper locker unit 203 and the stopper lock hole 202 of the first stopper unit 200 slide together. The stopper locker unit 203 is guided along the first guide surface 201a of the guide stopper member 201, as well as along the second guide surface 201b thereof.

As the stopper locker unit 203 is guided along the first guide surface 201a, it rises until it is inserted into the stopper lock hole 202. As a result, the stopper locker unit 203 restrains the leftward/rightward movement of the second member 50 along the second direction (axis) A2, and the second guide surface 201b maintains the position of the stopper locker unit 203 within the stopper lock hole 202.

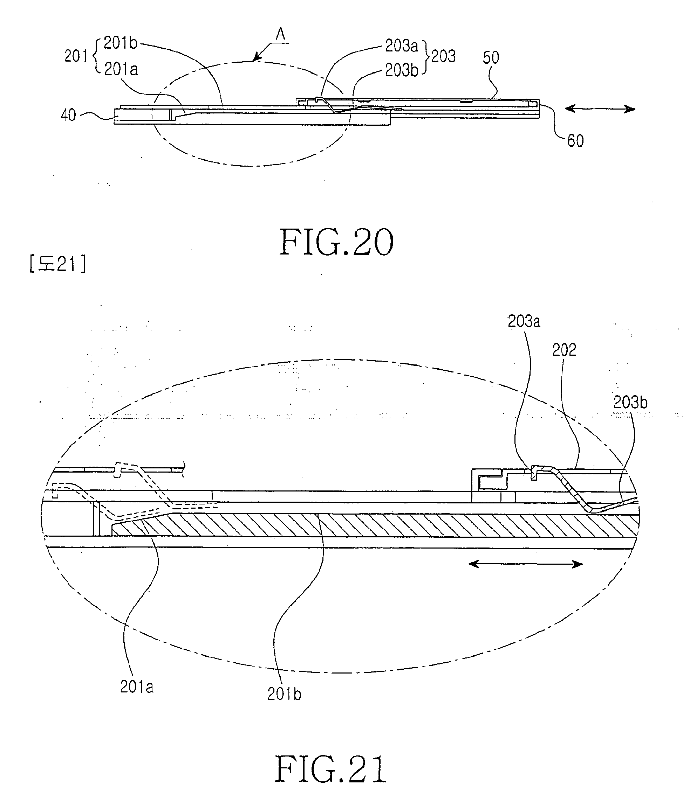

As shown in FIG. 21, the stopper locker unit 203 has a lock protrusion 203a positioned on one end thereof so that the lock protrusion 203a is inserted into the stopper lock hole 202 when the stopper lock unit 203 is guided along the second guide surface 201b of the guide stopper member 201.

When the second housing 30 is moved to the original position as shown in FIG. 18, the stopper locker unit 203 moves along the second guide surface 201b and, when reaching the movement termination position, moves down while being guided by the first guide surface 201a. At the same time, the lock protrusion 203a of the stopper locker unit 203 disengages from the stopper lock hole 202 and releases the constraint of the second member 50.

The leaf spring 203b, which is positioned on the other end of the stopper locker unit 203, provides elastic force to guide the stopper locker unit 203 along the first guide surface 201 a.

In this state, the second member 50 can move left/right along the second direction (axis) A2.

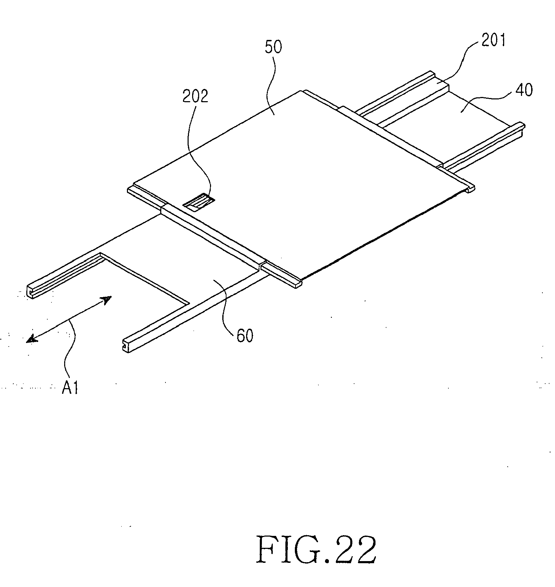

When it is desired to use the mobile phone in a different mode, for example, a camera mode, the user slides the second housing 30 down in the first direction A1 in relation to the first housing 20, as shown in FIG. 22.

After the second housing 30 is moved down in the first direction A1, the camera lens module (not shown) provided on the first housing 20 is exposed and is ready to take images.

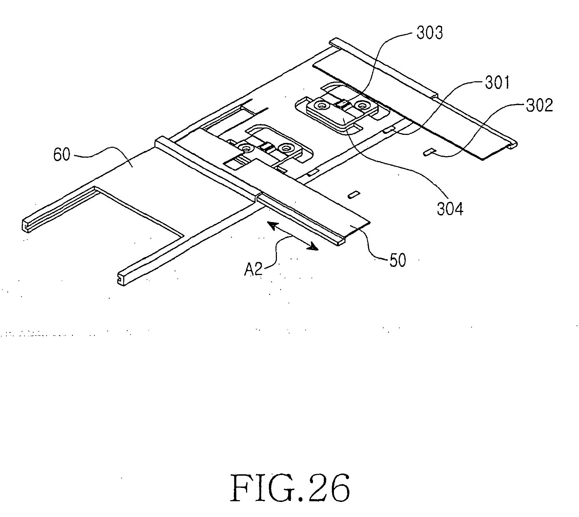

In this state, if it is desired to use the mobile phone in a different mode, for example, a TV viewing mode (or DMB mode), the user slides the second housing 30 along the first axis A1 back to the original position, shown in FIG. 18, and then slides the second housing 30 to the right along the second axis A2 in relation to the first housing 20, as shown in FIGS. 26 to 27.

The sliding movement of the second housing 30 is simultaneous with that of the second member 50.

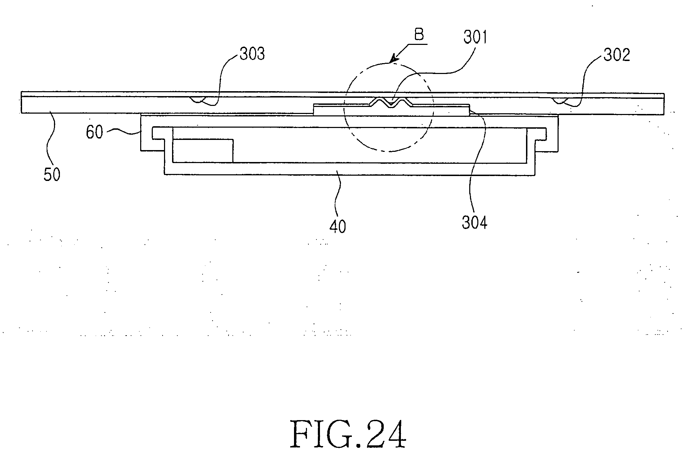

When the second housing 30 is in the initial sliding position as shown in FIG. 24, the first guide member 301 of the second stopper member 300 is inserted into the planar guide stopper unit 304. If the second housing 30 slides right in the second direction A2 in this state, the second member 50 moves together with the second housing 30, and so do the first, second, and third guide members 301, 302, and 303.

As shown in FIGS. 24 and 25, the first guide member 301 disengages from the contact space 304b defined in the guide stopper unit 304. The third guide member 303, which is positioned in the rightward movement termination position of the second housing 30, moves together when the second housing 30 moves right in the second direction A2 and reaches the movement termination position. Then, the third guide member 303 is inserted into the guide stopper unit 304 and limits the movement.

As shown in FIG. 25, the stopper guide surfaces 304a, which are positioned on the guide stopper unit 304 provide elastic force so that, when the surfaces positioned on the third guide member 303 contact the stopper guide surfaces 304a, the surfaces can move along the stopper guide surfaces 304a until they are inserted into the contact space 304b defined in the guide stopper unit 304. As such, the contact space 304b stops the third guide member 303 from moving.

According to one embodiment, the guide stopper unit 304 includes the leaf spring so that respective guide members 301, 302, and 303 can be engaged/disengaged.

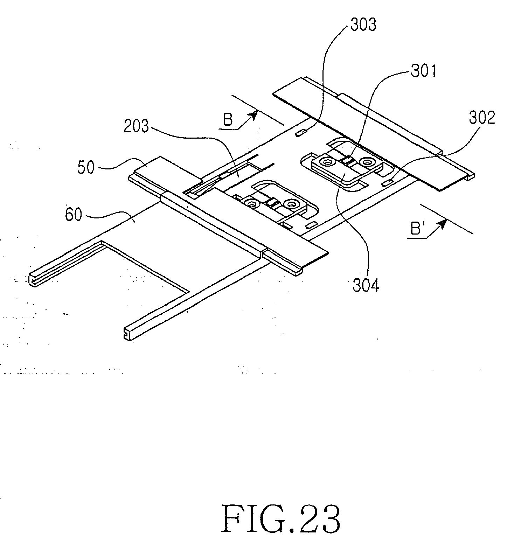

As the second housing 30 is moved back to the initial position , for example, as shown in FIGS. 23 and 24, the third guide member 303 disengages from the contact surfaces 304b of the guide stopper unit 304, and the first guide member 301, moving together with the third guide member 303, contacts the stopper guide surfaces 304a of the guide stopper unit 304 and is guided by them until the first guide member 301 is inserted into the contact space, contacting the contact surfaces 304b.

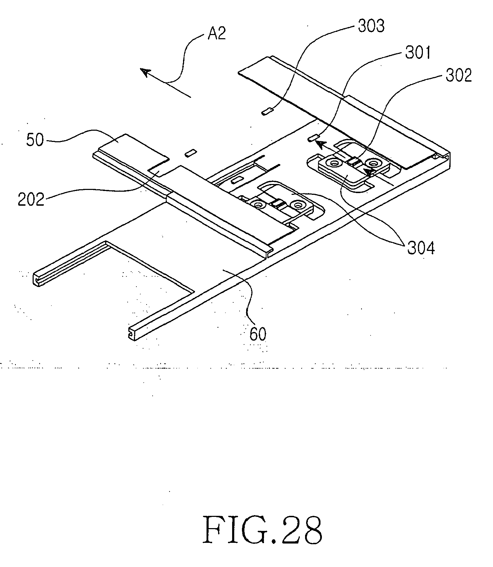

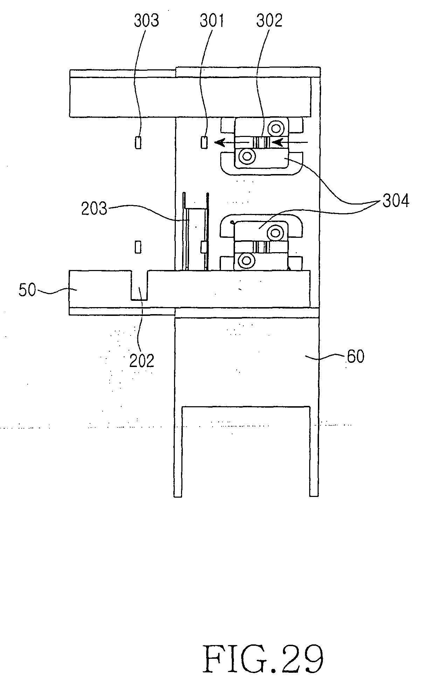

In this state, if it is desired to use the mobile phone in a different mode, for example, to listen to music that has been downloaded to the mobile phone (MP3 function), the user slides the second housing 30 left in the second direction A2 in relation to the first housing 20, as shown in FIGS. 28 and 29.

The sliding movement of the second housing 30 is simultaneous with that of the second member 50.

When the second housing 30 is in the initial position for sliding movement as shown in FIGS. 23 and 25, the first guide member 301 is inserted into the guide stopper unit 304. If the second housing 30 is slid left in the second direction A2 in this state, the second member 50 moves together with the second housing 30, and so do the first, second, and third guide members 301, 302, and 303. The first guide member 301 disengages from the contact space defined by the contact surfaces 304b in the guide stopper unit 304.

The second guide member 302 is positioned in the leftward movement termination position of the second housing 30, as shown in FIG. 29. If the second housing 30 is moved left in the second direction A2 until it reaches the movement termination position, the second guide member 302 moves together with the second housing 30 until the second guide member 302 is inserted into the guide stopper unit 304 and limits the movement.

The stopper guide surfaces 304a, which are positioned on the guide stopper unit 304, provide elastic force so that when the surfaces positioned on the second guide member 302 contact the stopper guide surfaces 304a, the surfaces can move along the stopper guide surfaces 304a until they are inserted into the contact space defined in the guide stopper unit 304and contact the contact surfaces 304b. As such, the contact surfaces 304b stop the second guide member 302 from moving.

As the second housing 30 is moved back to the initial position, for example, as shown in FIGS. 23 and 24, the second guide member 302 disengages from the contact surfaces 304b of the guide stopper unit 304, and the first guide member 301, moving together with the second guide member 302, contacts the stopper guide surfaces 304a of the guide stopper unit 304 and is guided by them until the first guide member 301 is inserted into the contact space and contacts the contact surfaces 304b.

As mentioned above, the first stopper unit, which restricts leftward/rightward movement when the second housing moves up/down, and the second stopper unit, which makes a surface contact to guide movement and limits leftward/rightward movement, ensure that the mobile phone can slide easily.

While the invention has been shown and described with reference to certain embodiments thereof, it will be understood by those skilled in the art that various changes in form and details may be made therein without departing from the spirit and scope of the invention as defined by the appended claims.

## Claims

1. A sliding module for a mobile phone including a first housing and a second housing, the second housing being slidably connected with the first housing, wherein the sliding module comprises:
a first member fixed to the first housing;
a second member fixed to the second housing; and
a sliding member provided between the first and second members, so that the second housing is assembled to be slidable up and down in a first direction and left and right in a second direction in relation to the first housing.

2. A sliding module as claimed in claim 1, further comprising a guiding unit provided on top and bottom sides of the sliding member to guide the second housing to slide up and down, left and right in the first and second directions in relation to the first housing.

3. A sliding module as claimed in claim 2, wherein the guiding unit comprises:
a first pair of guide rails positioned at opposite lateral edges of the first member and extending in the first direction;
a pair of first guide portions positioned at opposite lateral edges of the bottom side of the sliding member and extending in the first direction, the pair of first guide portions being slidably engaged with the first pair of guide rails so that the first guide portions move up and down in the first direction;
a second pair of guide rails positioned at opposite ends of the second member and extending in the second direction; and
a pair of second guide portions positioned at opposite ends of the top side of the sliding member and extending in the second direction, the pair of second guide portions being slidably engaged with the second pair of guide rails so that the second guide portions move left and right in the second direction.

4. A sliding module as claimed in claim 1, further comprising a biasing unit provided between the first member and the sliding member to provide a force urging the second housing to be moved up or down in the first direction when the second housing is moved greater than a predetermined distance from a sliding initiation position.

5. A sliding module as claimed in claim 4, wherein the biasing unit comprises elastic members, a first end of each elastic member being anchored to the first member and a second end being anchored to the sliding member, so that each elastic member is moved along a given track when the second housing is moved up and down.

6. A sliding module as claimed in claim 1, further comprising a stopper unit provided between the second member and the sliding member to limit the sliding movement of the second housing at a sliding termination position in each sliding direction when the second housing is moved left or right in relation to the first housing.

7. A sliding module as claimed in claim 6, wherein the stopper unit comprises:
first, second and third stopper members positioned on an inner surface of the second member at a sliding initiation position, a leftward sliding termination position, and a rightward sliding termination position, respectively, the first, second and third stopper members sliding together with the second member; and
a stopper clip unit provided on a top side of the sliding member such that when the second housing is moved from the sliding initiation position to the leftward or rightward sliding termination position, the stopper clip unit disengages from the first stopper member at the sliding initiation position and engages one of the second and third stopper members at the corresponding one of the leftward sliding termination position or rightward sliding termination position, thereby limiting movement of the second housing.

8. A sliding module as claimed in claim 7, wherein the stopper clip unit comprises a pair of elastic members providing an elastic force so that each of the stopper members can be engaged with or disengaged from the stopper clip unit.

9. A sliding module as claimed in claim 8, wherein the pair of elastic members comprises first and second wire springs, which are oppositely and symmetrically arranged with a locking space being positioned between the wire springs, so that each of the stopper members is inserted into or removed from the locking space.

10. A sliding module as claimed in claim 9, wherein the locking space has a pair of guide openings positioned at the opposite ends of the locking space guiding each of the stopper members when they are inserted into or removed from the locking space, and a stopper space positioned at a center of the locking space, so that each of the stopper members is locked in the stopper space, thereby stopping movement.

11. A sliding module as claimed in claim 9, wherein each end of each of the wire springs comprises a spring anchoring part, through which an anchoring member is inserted to anchor the wire springs to the top side of the sliding member.

12. A mobile phone comprising:
a first housing;
a second housing;
a first member fixed to first housing, the first member having a first pair of guide rails extending in a first direction;
a second member fixed to second housing, the second member having a second pair of guide rails extending in a second direction;
a sliding member disposed between the first and second members, the sliding members having a pair of first guide portions that are slidably engaged with the first pair of guide rails so that the first guide portions can slide in the first direction, and the sliding member having a pair of second guide portions that are slidably engaged with the second pair of guide rails so that the second guide portions can slide in the second direction.

13. A mobile phone as claimed in claim 12, wherein the first pair of guide rails are positioned at opposite lateral edges of the first member.

14. A mobile phone as claimed in claim 12, wherein the pair of first guide portions positioned at opposite lateral edges of a bottom side of the sliding member.

15. A mobile phone as claimed in claim 12, further comprising a biasing unit provided between the first member and the sliding member urging the second housing to move in the first direction.

16. A mobile phone as claimed in claim 15, wherein the biasing unit comprises at least one elastic member, a first end of the at least one elastic member being anchored to the first member and a second end the at least one elastic member being anchored to the sliding member.

17. A mobile phone as claimed in claim 12, further comprising a stopper unit, provided between the second member and the sliding member, and limiting the movement of the second housing in the second direction.

18. A mobile phone as claimed in claim 17, wherein the stopper unit comprises:
first, second, and third stopper members disposed on an inner surface of the second member at a sliding initiation position, a leftward sliding termination position, and a rightward sliding termination position, respectively; and
a stopper clip unit, provided on a top side of the sliding member, and engaging the first, second, and third stopper members at the sliding initiation position, leftward sliding termination position, and rightward sliding termination position, respectively.

19. A mobile phone as claimed in claim 18, wherein the stopper clip unit comprises a pair of elastic members providing an elastic force so that each of the stopper members can be engaged with or disengaged from the stopper clip unit.

20. A mobile phone as claimed in claim 19, wherein the pair of elastic members comprises first and second wire springs, which are arranged to form a locking space receiving the stopper members between the wire springs.

21. A mobile phone as claimed in claim 20, wherein the locking space has a pair of guide openings positioned at opposite ends of the locking space to guide insertion and removal of the stopper members from the locking space, and a stopper space at a center of the locking space to receive the stopper members, thereby stopping movement.

22. A mobile phone as claimed in claim 20, wherein ends of each of the wire springs comprise a spring anchoring part anchoring the wire springs to the top side of the sliding member.

23. A sliding module for a mobile phone including a first housing and a second housing, the second housing being slidably connected with the first housing, wherein the sliding module comprises:
first and second members fixed to the first and second housings, respectively;
a sliding member provided between the first and second members, so that the second housing is assembled to be slidable up and down in a first direction and left and right in a second direction in relation to the first housing;
a first stopper unit positioned between respective members to limit leftward/rightward sliding movement in the second direction when the second housing slides up/down in the first direction; and
a second stopper unit positioned between the second member and the sliding member, the second stopper unit selectively making a surface contact with guide members of the second member and engaging with/disengaging from the guide members to limit sliding movement in leftward and rightward termination positions of the second housing.

24. A sliding module as claimed in claim 23, wherein the first stopper unit comprises:
a guide stopper member positioned on an inner portion of the first member;
a stopper lock hole positioned on the second member; and
a stopper locker unit positioned on the sliding member to correspond to the guide stopper member and the stopper lock hole, the stopper locker unit being guided along the guide stopper member when the second housing moves up/down in the first direction, so that the stopper locker unit engages with/disengages from the stopper locker hole of the second member and restricts leftward/rightward movement of the second housing.

25. A sliding module as claimed in claim 24, wherein the guide stopper member has a first guide surface thereon so that the stopper locker unit engages with/disengages from the stopper locker hole when guided by the first guide surface, and a second guide surface thereon so that when the stopper locker unit is guided by the second guide surface, the stopper locker unit is inserted into the stopper locker hole and remains inserted.

26. A sliding module as claimed in claim 24, wherein the stopper locker unit has a lock protrusion positioned on a first end, the locker protrusion engaging with/disengaging from the stopper locker hole, and a leaf spring positioned on a second end, the leaf spring providing an elastic force so that the lock protrusion moves after engagement/disengagement.

27. A sliding module as claimed in claim 24, wherein the sliding member has a mounting hole formed therein in which the stopper locker unit is mounted.

28. A sliding module as claimed in claim 23, wherein the second stopper unit comprises:
first, second, and third guide members positioned on an inner surface of the second member in an initial sliding movement position, a leftward termination position, and a rightward termination position of the second housing, respectively, and adapted to slide together with the second member; and
a guide stopper unit positioned on a top surface of the sliding member in a planar shape so that when the second housing is in the initial sliding movement position or moves left/right in the second direction, the first, second, and third guide members move together, the guide stopper unit making a surface contact with respective guide members in the initial sliding movement position, the leftward termination position, and the rightward termination position of the second housing and engaging with/disengaging from the guide members to limit movement.

29. A sliding module as claimed in claim 28, wherein:
the guide stopper unit comprises a leaf spring;
stopper guide surfaces are formed on left and right ends of the guide stopper unit, with respect to the second direction, to guide respective guide members when engaging/disengaging with respective guide members; and
contact surfaces are defined at a central portion of the guide stopper unit so that respective guide members are guided along the stopper guide surfaces and stop moving when making contact with the contact surfaces.

30. A sliding module as claimed in claim 23, wherein the second stopper unit has at least one fastener positioned thereon, the fastener being fastened to a screw hole positioned on the sliding member.

31. A sliding module for a mobile phone including a first housing and a second housing, the second housing being slidably connected with the first housing, the sliding module comprising:
first and second members fixed to the first and second housings, respectively;
a sliding member provided between and slidably connecting the first and second members, such that the second member selectively slides in a plane substantially parallel to the first member along a first axis or a second axis substantially perpendicular to the first axis, the sliding member preventing sliding along the non-selected axis.
